(19) Europäisches Patentamt
European Patent Office
Office européen des brevets

(11) **EP 1 654 296 B1**

(12) **EUROPÄISCHE PATENTSCHRIFT**

(45) Veröffentlichungstag und Bekanntmachung des Hinweises auf die Patenterteilung:
**17.02.2016 Patentblatt 2016/07**

(21) Anmeldenummer: **04744749.5**

(22) Anmeldetag: **05.08.2004**

(51) Int Cl.:
*C08F 275/00* (2006.01)     *C08F 285/00* (2006.01)
*C08F 265/04* (2006.01)     *C09D 151/00* (2006.01)
*C08F 220/18* (2006.01)     *B01J 13/00* (2006.01)
*C09D 133/00* (2006.01)

(86) Internationale Anmeldenummer:
**PCT/IB2004/051403**

(87) Internationale Veröffentlichungsnummer:
**WO 2005/014678 (17.02.2005 Gazette 2005/07)**

(54) **PHOSPHONS UREMODIFIZIERTE MIKROGELDISPERSION**

PHOSPHONIC ACID-MODIFIED MICROGEL DISPERSION

DISPERSION DE MICROGEL MODIFIEE AVEC DE L'ACIDE PHOSPHONIQUE

(84) Benannte Vertragsstaaten:
**AT BE BG CH CY CZ DE DK EE ES FI FR GB GR HU IE IT LI LU MC NL PL PT RO SE SI SK TR**

(30) Priorität: **08.08.2003 DE 10336770**

(43) Veröffentlichungstag der Anmeldung:
**10.05.2006 Patentblatt 2006/19**

(73) Patentinhaber: **Bollig & Kemper GmbH & Co. KG**
**50827 Köln (DE)**

(72) Erfinder: **MÜLLER, Horst**
**51069 Köln (DE)**

(74) Vertreter: **Michalski Hüttermann & Partner**
**Patentanwälte mbB et al**
**Speditionstraße 21**
**40221 Düsseldorf (DE)**

(56) Entgegenhaltungen:
**EP-A- 0 117 174     EP-A- 1 156 089**
**EP-A- 1 203 786     EP-A- 1 295 922**
**WO-A-00/63265     WO-A-00/63266**
**WO-A-96/24619     GB-A- 846 471**
**GB-A- 1 493 744     US-A- 2 908 659**
**US-A- 4 245 036**

**Beschreibung**

Die vorliegende Erfindung betrifft ein emulator freies Mikrogel sowie dessen Verwendung in einer Mehrschichtlackierung, insbesondere bei der Serienlackierung von Automobilrohkarosserien.

Für die Serienlackierung von Automobilrohkarosserien wird im allgemeinen eine Mehrschichtlackierung aus insgesamt vier voneinander unterschiedlichen Schichten (Vierschichtaufbau) verwendet, wobei diese vier Schichten nacheinander in getrennten Lackieranlagen aufgetragen werden:

Die erste, direkt auf dem Autoblech befindliche Schicht ist eine elektrophoretisch aufgetragene Schicht (Electrocoatschicht, KTL-Schicht), die durch Elektrotauchlackierung - hauptsächlich kathodische Tauchlackierung (KTL) - zwecks Korrosionsschutz aufgebracht und anschließend eingebrannt wird.

Die zweite, auf der Elektrocoatschicht befindliche und etwa 30 bis 40 $\mu$m dicke Schicht ist eine sogenannte Füllerschicht, die einerseits Schutz gegen mechanische Angriffe (Steinschlagschutzfunktion) bietet, andererseits einen ausreichenden Decklackstand gewährleistet, d.h. die rauhe Oberfläche der Rohkarosserie für die nachfolgende Decklackierung glättet und kleinere Unebenheiten ausfüllt. Die zur Herstellung dieser Füllerschicht verwendeten Lacke enthalten neben Bindemitteln auch Pigmente. Dabei hat die Benutzbarkeit der verwendeten Pigmente einen Einfluss auf den Decklackstand der gesamten Mehrschichtlackierung und auch auf den Glanz der Füllerschicht, wie er von einigen Automobilherstellern gefordert wird. Die Füllerschicht wird größtentells durch Applikation mit elektrostatischen Hochrotationsglocken und anschließendem Einbrennvorgang bei Temperaturen über 130 °C erzeugt.

Die dritte, auf der Füllerschicht befindliche Schicht ist die Basislackschicht, die durch entsprechende Pigmente der Karosserie die gewünschte Farbe gibt. Der Basislack wird im herkömmlichen Spritzverfahren aufgetragen. Die Schichtdicke dieser herkömmlichen Basislackschicht liegt je nach Farbton zwischen etwa 12 bis 25 $\mu$m. Meistens wird diese Schicht, besonders bei Metallic-Effektlacken, in zwei Verfahrensschritten aufgebracht. In einem ersten Schritt erfolgt die Auftragung mittels elektrostatischer Hochrotationsglocken, gefolgt von einem zweiten Auftrag mittels pneumatischer Zerstäubung. Diese Schicht wird (bei Verwendung von wässrigem Basislack) mit Infrarotstrahlern und/oder durch Warmluftkonvektion zwischengetrocknet.

Die vierte und oberste, auf der Basislackschicht befindliche Schicht ist die Klarlackschicht, die meistens in einem Auftrag durch elektrostatische Hochrotationsglocken aufgetragen wird. Sie verleiht der Karosserie den gewünschten Glanz und schützt den Basislack vor Umwelteinflüssen (UV-Strahlung, Salzwasser, etc.).

Anschließend werden die Basislackschicht und die Klarlackschicht gemeinsam eingebrannt.

An einen in dieser Mehrschichtlackierung einsetzbaren wasserverdünnbaren Basislack bzw. einer daraus hergestellten Basislackschicht werden neben der farbgebenden Eigenschaft noch weitere, wesentliche Anforderungen gestellt:

Zum einen muss die Basislackschicht in ausgehärtetem Zustand zu einer optimalen Ausrichtung der als Effektpigmente verwendeten Aluminiumflakes führen. Diese unter dem Begriff "Flip/Flop-Effekt" bekannte Eigenschaft ist für jede Metalliclackierung von entscheidender Bedeutung. Ein besonders guter "Flip/Flop-Effekt" wird dann erreicht, wenn die plättchenförmigen Effektpigmente möglichst gleichmäßig in einem flachen Winkel zur Lackschicht ausgerichtet sind. Eine sehr gute Aluminiumorientierung trägt auch dazu bei, dass das negative Erscheinungsbild der sogenannten "Wolkenblldung" nicht auftritt.

Darüber hinaus muss die Basislackschicht eine genau definierte Haftung zu den unter und über ihr befindlichen Lackschichten aufweisen. Damit hat der Basislack den entscheidenden Einfluss auf die Steinschlagbeständigkeit der resultierenden Mehrschichtlackierung von Automobitserienkarosserien. In diesem Zusammenhang ist anzumerken, dass die Steinschlagbeständigkeit ein sogenanntes "k.o.-Kriterium" ist, d.h. dass nur solche Mehrschichtlackierungen im Produktionsbetrieb eingesetzt werden dürfen, die zuvor den Steinschlagtest nach VDA bestanden haben. Dieser Test ist dann bestanden, wenn die fertige Mehrschichtlackierung bei einer genau definierten mechanischen Belastung Abplatzungen aufweist, die eine bestimmte Fläche nicht überschreiten und die auf eine Abtrennung der Basislackschicht von der darunter befindlichen Füllerschicht zurückzuführen sind. Folglich muss die Haftung der Basislackschicht so eingestellt werden, dass sie einerseits hoch genug ist, damit sich die Klarlackschicht nicht von ihr löst, dennoch aber so niedrig ist, um die Füllerschicht bei Steinschlag nicht mitzureißen, was ansonsten zu erheblichen Korrosionsschäden an der Automobilkarosserie führen würde.

Zum anderen muss der Basislack eine gute Verarbeitbarkeit aufweisen. Das bedeutet, dass möglichst in einem Spritzauftrag eine so hohe Schichtdicke erzielt werden kann, dass eine ausreichende Farbdeckung sichergestellt ist. Werden für den stark deckenden Farbton Schwarz lediglich 17 $\mu$m Dicke der Basislackschicht für eine ausreichende Farbdeckung benötigt, so sind es für den weniger deckenden Farbton Weiß mindestens 45 $\mu$m. Eine solche Schichtdicke mit einem Spritzvorgang aufzutragen, ist immer noch ein erhebliches Problem, da die rheologischen Eigenschaften des wasserverdünnbaren Basislacks entsprechend vorhanden sein müssen.

Bei Basislacken mit Metalliceffektpigmenten ist die zuvor beschrieben Problematik, d.h. bei einer üblichen Schichtdicke von etwa 18 $\mu$m eine ausreichende Standsicherheit zu gewährleisten, besonders deutlich. Ein in diesem Zusammenhang besonders kritischer Farbton ist Silbermetallic.

Unter dem Begriff "rheologische Eigenschaften" wird verstanden, dass der Lack einerseits beim Spritzvorgang, also bei hohen Schergeschwindigkeiten, eine so niedrige Viskosität hat, dass er leicht zerstäubt werden kann, und andererseits beim Auftreffen auf das Substrat, also bei niedrigen Schergeschwindigkeiten, eine so hohe Viskosität hat, dass er genügend standfest ist und keine Läuferbildung zeigt. Je höher die Schichtdicke sein soll, um so größer ist das Problem, diese widersprüchlichen Eigenschaften zu vereinigen. Auch die Ausbildung eines ausgeprägten Metallic-Effektes hängt mit diesen Eigenschaften zusammen.

Diese grundsätzliche Problematik ist wohl auch der Grund, warum eine Vielzahl von Druckschriften sich mit speziell abgestimmten Bindemittelsystemen oder auch mit speziellen Additiven für wasserverdünnbare Basislacke beschäftigt.

Zur Verbesserung der rheologischen Eigenschaften und zur besseren Ausbildung des Metallic-Effektes werden besondere Additive beschrieben (EP-0 281 936). Hierbei handelt es sich um spezielle Schichtsilikate, die beträchtliche Mengen an Alkali- oder Erdalkaliionen enthalten. Diese Ionen führen oft wegen ihrer wasseranziehenden Wirkung zu einer schlechten Schwitzwasserbeständigkeit im Gesamtaufbau einer Automobilbeschichtung.

Daher ist es ein Bestreben der Lackhersteller, solche Additive nach Möglichkeit zu vermeiden und als Bindemittel solche Polymere zu verwenden, die die gewünschten Eigenschaften von sich aus mitbringen, sogenannte "maßgeschneiderte" Polymere.

Einer der wichtigsten Vertreter dieser Spezies sind in wässriger Dispersion vorliegende vernetzte Polymermikroteilchen oder auch kurz "Mikrogele" genannt.

Der Zusatz von Mikrogelen bewirkt nicht nur eine Verbesserung der rheologischen Eigenschaften, sondern hat auch einen erheblichen Einfluss auf die Standsicherheit des aufzutragenden Lacks, der Ausrichtung der Effektpigmente und die Haftung des Basislacks auf der darunter befindlichen Füllerschicht und somit einen entscheidenden Einfluss auf die Steinschlagbeständigkeit der Mehrschichtlackierung. Allerdings ist festzustellen, dass durch den Zusatz von Mikrogelen nicht alle der zuvor genannten Eigenschaften positiv beeinflusst werden:

Besondere Mikrogele sind aus der EP 0 030 439 BI und der EP 0 242 235 A1 bekannt. Die dort als vorteilhaft auch für Metallic-Lackierungen beschriebene wässrige Mikrogel-Dispersionen sind jedoch keine vollständig vernetzten Mikrogele sondern gehören zu den sogenannten "Core/Shell"- oder auch als "Kern/Schale"- bezeichneten Mikrogelen.

Unter dem Begriff "Core/Shell-Struktur" wird verstanden, dass das Polymerteilchen im wesentlichen aus zwei verschiedenen Bereichen aufgebaut ist: Der innere Bereich (Core) wird von einem äußeren Bereich (Shell) umgeben, wobei diese Bereiche eine unterschiedliche chemische Zusammensetzung haben und daraus resultierend auch unterschiedliche physikalische Eigenschaften.

Der Kern dieses Mikrogels ist erhältlich aus einer Mischung, die neben monofunktionellen Monomeren auch difunktionelle Monomere enthält. Die Vernetzung erfolgt unter Verwendung eines Emulgators. Anschließend wird dieses so vernetzte Mikroteilchen gemäß der EP 0 030 439 B1 mit einer Schicht aus nicht vernetztem Acrylpolymer überzogen und gepfropft. Entsprechend der EP 0 242 235 A1 wird das vernetzte Mikroteilchen mit einer Schicht aus polymerisierbaren aromatischen Verbindungen überzogen.

Ferner Ist In der EP 0 030 439 B1 beschrieben, die in wässriger Dispersion vorliegenden Mikrogele in eine nicht wässrige Phase zu überführen und für lösemittelhakige Beschichtungszusammensetzungen zu verwenden.

Aus der EP 0 038 127 B1, EP 0 029 637 A1 und der GB 2 159 161 A sind Mikrogele bekannt, die erhältlich sind durch Polymerisation geeigneter Monomere in Gegenwart eines Emulgators, beispielsweise N,N-Bis(hydroxyethyl)taurin.

Unter dem Begrif "Emulgator" sind solche Verbindungen zu verstehen, die sowohl einen hydrophilen als auch einen hydrophoben Rest aufweisen. Emulgatoren bewirken eine Stabilisierung von Emulsionen, d.h. von dispersen Systemen von zwei nicht- oder nur teilweise miteinander mischbaren Flüssigkeiten oder Phasen, von denen die eine in der anderen fein zerteilt ist. Eine weitergehende Definition solcher Verbindungen wird z.B. in "Römpps Chemie Lexikon" (Bd. 2, 8. Auflage, 1981, S. 1126-1127) gegeben. Generell unterscheidet man zwischen ionischen, nicht-ionischen und amphoteren Emulgatoren. Für farbgebende Beschichtungszusammensetzungen werden Emulgatoren verwendet, die als hydrophilen Rest eine von Sulfonsäure stammende Gruppe und als hydrophoben Rest einen längerkettigen Fettsäurealkylrest aufweisen.

Ein wesentlicher Nachteil der unter Verwendung eines Emulgators hergestellten Mikrogele besteht in dem Verbleib des Emulgators im fertigen Mikrogel, da letzteres, beispielsweise aufgrund der im Emulgator vorhandenen schwefelhaltigen Gruppierungen (Sulfonsäuregruppen), so für eine Vielzahl von Anwendungen nur mit erheblichen Nachteilen eingesetzt werden kann. So haben solche Mikrogele aufgrund des in Ihnen enthaltenen Emulgators nachteilige Eigenschaften, beispielsweise im Hinblick auf deren Verwendung in wasserverdünnbaren Basislacken in der Automobilindustrie, insbesondere hinsichttich der Wasserlagerung und Schwitzwasserbeständigkeit.

Auch die EP-0 502 934 beschreibt eine Mikrogeldispersion. Diese dient sowohl zur Verbesserung der rheologischen Eigenschaften, als auch zur Erhöhung der Gasungsstabilität von wässrigen Metallicbasislacken. Die Herstellung dieser Mikrogeldispersionen erfolgt durch eine einstufige Polykondensation eines Polyesterpolyols mit einem Aminoplastharz (Melaminharz) in wässriger Phase.

Die Verwendung dieses Mikrogels in Basislacken bei der Lackierung von Automobilkarosserien hat aber den Nachteil, dass die Haftung zwischen der Basislarkschicht und einer darauf befindlichen, aus einem Pulverklarlack oder einer Pulverklarlackslurry aufgebrachten Klarlackschicht nicht den von der Automobilindustrie vorgeschriebenen Anforderungen entspricht.

Aus der EP 1 156 089 A1 sind Acrylat-Blockcopolymere bekannt, die Phosphorsäuregruppen tragen.

US 4 245 036 A beschreibt klare Gelautine-Latex Mischungen auf Basis von Polyacrylaten.

Ferner sind aus der DE 195 04 015 A1 und WO 96/24619 A1 Mikrogele bekannt, die durch Polymerisation einer ethylenisch monofunktionellen Verbindung (Polyacrylat) mit mindestens einer ethylenisch di- oder multifunktionellen Verbindung in Gegenwart eines Polyesters hergestellt werden. Der Polyester wirkt hierbei als Emulgator und Stabilisator.

Diese Mikrogele haben den Nachteil, dass die rheologischen Eigenschaften dieser Lacke nicht mehr den gesteigerten Anforderungen der Automobilindustrie entsprechen. Dies zeigt sich besonders deutlich hinsichtlich der Anforderungen an die Viskosität einerseits und an die Standsicherheit andererseits.

So ist es unter Verwendung dieser Mikrogele nicht möglich, einen wässrigen Basislack bereitzustellen, der bei einer Schergeschwindigkeit von 1.000 $s^{-1}$ eine Viskosität von maximal 120 mPa·s hat und dabei so standfest ist, dass die notwendigen Schichtdicken von 20 - 30 $\mu$m (in Abhängigkeit des jeweiligen Farbtons auch geringer oder höher) läuferfrei erreicht werden.

Des weiteren sind aus der WO 00/63265 und der WO 00/63266 Mikrogele bekannt, die aus einem mehrstufigen Polymerisationsverfahren erhältlich sind, wobei in einem ersten Schritt eine Polymerisation von ethylenisch monofunktionellen Verbindungen mit ethylenisch di- oder multifunktionellen Verbindungen in Gegenwart eines Polyesterpolyols, Polyurethans und/oder Polyacrylats durchgeführt wird. Als letzter Schritt wird das so erhaltene Produkt mit einem Vernetzer umgesetzt. Jedoch zeigt sich bei der Umsetzung von Trimellithsäure oder dessen Anhydrid mit dem Poly(meth)acrylat eine Gefahr des Gelierens.

Aufgabe der vorliegenden Erfindung ist die Bereitstellung eines wasserverdünnbaren Mikrogels, das in wasserverdünnbaren Basislacken, insbesondere für die Automobilindustrie, eingesetzt werden kann. Die daraus erhältlichen Mehrschichtlackierungen sollen die zuvor beschriebenen Nachteile des Standes der Technik überwinden, insbesondere soll die farbgebende Schicht eine ausreichende Unanfälligkeit gegenüber Wolkenbildung aufweisen und das Gesamteigenschaftsniveau der fertigen Mehrschichtlackierung soll den hohen Anforderung der Automobilhersteller (insbesondere in Hinblick auf Appearance und Steinschlagbeständigkeit) genügen.

Darüber hinaus soll dieses Mikrogel insbesondere mit Bindemittelsystemen auf Basis von Polyurethanen und Polyacrylaten gut kompatibel sein und besonders hochwertige Beschichtungen ergeben.

Diese Aufgabe wird erfindungsgemäß gelöst durch ein emulgatorfreies, in wässriger Phase dispergiertes Mikrogel, erhältlich durch

a) Herstellung eines Polyacrylats (A) in Gegenwart mindestens einer eine Phosphonsäuregruppe aufweisenden Verbindung (B) die kein Emulgator ist, wobei das Polyacrylat (A) mindestens eine Hydroxylgruppe und mindestens eine Carboxylgruppe aufweist;

b) Vernetzung in wässriger Phase der aus Schritt a) stammenden Reaktionsmischung mit einem Aminoplastharz (C);

wobei die aus Schritt b) stammende Reaktionsmischung keiner anschließenden Emulsionspolymerisation unterzogen wird.

Das aus Schritt a) resultierende Polyacrylat (A) kann vor dem Schritt b) einer Emulsionspolymerisation mit mindestens einer Monomerverbindung (D) unterzogen werden, wobei Monomerverbindung (D) mindestens eine radikalisch polymerisierbare Doppelbindung enthält.

Eine diese emulgatorfreie Mikrogeldispersion enthaltende Beschichtungszusammensetzung zeigt eine so ausgezeichnete Haftung, dass sie auch in als kritisch geltenden Mehrschichtlackierungen, insbesondere in Verbindung mit Pulverklarlacken, in der Automobilserienlackierung eingesetzt werden kann.

Durch die Gegenwart der Phosphonsäuregruppe während des Reaktionsschritts a) ist gewährleistet, dass in wässriger Phase die aus Schritt a) erhältliche Mischung mit dem Aminoplastharz (C) im Schritt b) zu einer Mikrogeldispersion reagiert, d.h. dass vernetzte Teilchen gebildet werden, ohne dass die Stabilität der Dispersion beeinträchtigt wird. So wird wirksam eine Koagulation der Dispersion vermieden.

Im Gegensatz zu den bekannten Verfahren des Standes der Technik wird bei allen erfindungsgemäßen Ausführungsformen keine Trimellithsäure oder deren Anhydrid verwendet. Diese Verbindungen haben den entscheidenden Nachteil, dass sie die Gefahr des Gelierens bei der Herstellung von Mikrogelen in einer Umsetzung mit einem Poly(meth)acrylat erheblich erhöhen.

Die Umsetzung zum erfindungsgemäßen Mikrogel ist unabhängig von einem für wasserverdünnbare Beschichtungszusammensetzungen üblichem pH-Wert der Reaktionsmischung möglich. Somit ist unabhängig vom Neutralisationsgrad eine Vernetzung gewährleistet: Selbst bei 100 %-igem Neutralisationsgrad findet eine Vernetzung statt, sogar mit einem bei niedrigen Einbrenntemperaturen (d.h. von weniger als 100 °C) reaktionsträgen Melaminharz, wie z.B. Hexamethoxymethylmelamin. Demgegenüber hat der Neutralisationsgrad bei der Herstellung von Mikrogeldispersionenen des Standes der Technik einen erheblichen Einfluss auf die Vernetzungsreaktion: Mit steigendem Neutralisationsgrad wird die Vernetzung verringert, wenn nicht sogar verhindert.

Durch die besondere Herstellungsweise des erfindungsgemäßen Mikrogels ist es darüber hinaus möglich, die bei der Herstellung des Polyacrylats (A) bzw. (E) benötigten Lösemittel so auszuwählen, dass diese bei der applikationsfertigen Beschichtungszusammensetzung verbleiben können. Das aufwendige Entfernen der für die Polymerisation benötigten Lösemittel entfällt folglich. Besonders bevorzugt als Lösemittel in diesem Zusammenhang ist Butylglykol.

Den Grad der Vernetzung der Mikrogele erkennt man am Gehalt der unlöslichen Anteile. Die unlöslichen Anteile werden mittels der sogenannten "THF-Methode" bestimmt. Hierzu werden in ein Zentrifugenröhrchen ca. 1 g der Mikrogeldispersion eingewogen, mit 10 ml Tetrahydrofuran versetzt und ca. 1 Minute lang in einem Ultraschallbad homogenisiert. Dann wird mittels einer Zentrifuge mit Festwinkel-Rotor 15 Minuten lang bei 13.500 U/min zentrifugiert. Anschließend wird der Überstand vorsichtig abdekantiert und das Röhrchen in einem Laborofen 6 h lang bei 105 °C getrocknet. Nach Abkühlen des Röhrchens wird der Rückstand zurückgewogen. Die unlöslichen Anteile werden gemäß folgender Formel berechnet:

$$\% \text{ unlösliche Anteile} = \frac{\text{Rückstand}*10000}{\text{Einwaage}*\%\,\text{Festkörpergehalt der Mikrogeldispersion}}$$

Unter dem Begriff "größtenteils vernetzt" werden solche Mikrogele verstanden, die bezogen auf den vernetzten Teil einen Anteil an unvernetzten Polymeren von nicht mehr als 50 Gew.-% aufweisen.

Das erfindungsgemäße, emulgatorfreie und phosphonsäuremodifizierte Mikrogel liegt in wässriger Dispersion vor und verleiht Beschichtungszusammensetzungen, die diese Mikrogeldispersionen enthalten, eine erhöhte Strukturviskosität, so dass eine ausreichende Standsicherheit bei der Applikation gewährleistet ist, wobei die resultierenden Beschichtungszusammensetzungen sowohl chemisch als auch physikalisch härtbar sind.

Im Rahmen der vorliegenden Erfindung bedeutet die Eigenschaft "wässrig", dass die erfindungsgemäßen Dispersionen keine oder nur untergeordnete Mengen an organischen Lösemitteln enthalten. Untergeordnete Mengen sind solche Mengen, die die wässrige Natur der erfindungsgemäßen Dispersionen nicht zerstören.

Die Eigenschaft "strukturviskos" bedeutet, dass Beschichtungszusammensetzungen, die diese emulgatorfreie Mikrogeldispersionen enthalten, eine Viskosität zeigen, die bei höheren Schubspannungen oder höherem Geschwindigkeitsgefälle kleiner ist als bei niedrigen Werten (vgl. Römpp Lexikon Lacke und Druckfarben, Georg Thieme Verlag, Stuttgart, New York, 1998, Seite 546, "Strukturviskosität").

Diese Strukturviskosität ist zeitunabhängig. Diese Zeitunabhängigkeit bedeutet, dass der Verlauf der Viskosität in Abhängigkeit der Schergeschwindigkeit sowohl bei zunehmender Schergeschwindigkeit als auch bei abnehmender Schergeschwindigkeit identisch ist.

Dieses strukturviskose Verhalten trägt einerseits den Bedürfnissen der Spritzapplikation und andererseits auch den Erfordernissen hinsichtlich Lager- und Absetzstabilität Rechnung:

Im bewegten Zustand, wie beispielsweise beim Umpumpen einer Beschichtungszusammensetzung, die die erfindungsgemäßen Mikrogele enthält, in der Ringleitung der Lackieranlage und beim Versprühen, nimmt die Beschichtungszusammensetzung einen niederviskosen Zustand ein, der eine gute Verarbeitbarkeit gewährleistet. Ohne Scherbeanspruchung hingegen steigt die Viskosität an und gewährleistet auf diese Weise, dass die bereits auf der Substratoberfläche befindliche Beschichtungszusammensetzung eine verringerte Neigung zum Ablaufen an senkrechten Flächen zeigt ("Läuferbildung"). In gleicher Weise führt die höhere Viskosität im unbewegten Zustand, wie etwa bei der Lagerung, dazu, dass ein Absetzen von gegebenenfalls vorhandenen festen Bestandteilen wie Pigmenten größtenteils verhindert wird oder ein Wiederaufrühren der während der Lagerzeit nur schwach abgesetzten festen Bestandteilen gewährleistet ist.

Im Rahmen der vorliegenden Erfindung bedeutet der Begriff "physikalische Härtung" die Härtung einer Schicht aus einem Beschichtungsstoff durch Verfilmung durch Lösemittelabgabe aus dem Beschichtungsstoff, wobei die Verknüpfung innerhalb der Beschichtung über Schlaufenbildung der Polymermoleküle der filmbildenden Komponenten oder der Bindemittel (zu dem Begriff vgl. Römpp Lexikon Lacke und Druckfarben, Georg Thieme Verlag, Stuttgart, New York, 1998, "Bindemittel", Seiten 73 und 74) erfolgt. Oder aber die Verfilmung erfolgt über die Koaleszenz von Bindemittelteilchen (vgl. Römpp Lexikon Lacke und Druckfarben, Georg Thieme Verlag, Stuttgart, New York, 1998, "Härtung", Seiten 274 und 275). Üblicherweise sind hierfür keine Vernetzungsmittel notwendig. Gegebenenfalls kann die physikalische Härtung durch Hitze oder durch Einwirkung aktinischer Strahlung unterstützt werden.

Im Gegensatz dazu bedeutet der Begriff "chemische Härtung" die Härtung einer Schicht aus einem Beschichtungsstoff durch chemische Reaktion (s. "Härtung von Kunststoffen" in Römpps Chemie Lexikon, 8. Aufl., 1983, S. 1602 f.).

Üblicherweise wird die chemische Härtung durch Luftsauerstoff oder durch Vernetzungsmittel erreicht.

Entsprechend einer bevorzugten Ausführungsform der vorliegenden Erfindung ist das Polyacrylat (A) erhältlich durch Polymerisation

- eines Monomers (i) mit mindestens einer polymerisierbaren Doppelbindung und mindestens einer Hydroxylgruppe;
- eines Monomers (ii) mit mindestens einer polymerisierbaren Doppelbindung und mindestens einer Carboxylgruppe; und
- eines Monomers (iii) ohne Hydroxylgruppe und ohne Carboxylgruppe mit mindestens einer polymerisierbaren Doppelbindung.

Durch die Menge an hydroxylgruppenhaltigen Monomeren kann hier die Vernetzungsdichte eingestellt werden. Bei einer geringen Menge hydroxylgruppenhaltiger Monomere in Abhängigkeit des Molekulargewichts des Polymeren liegen die Vernetzungspunkte weiter auseinander. Erhöht man die Menge hydroxylgruppenhaltiger Monomere, so sind die Vernetzungspunkte dichter angeordnet.

Hierdurch wird sowohl die Orientierung der Effektpigmente, die Standsicherheit, als auch die Rheologie der die erfindungsgemäße, emulgatorfreie Mikrogeldispersion enthaltenden Beschichtungszusammensetzung positiv beeinflusst. Durch eine ausreichende Menge des Monomers ii) wird die Stabilität der Mikrogeldispersion in Wasser positiv beeinflusst. Allerdings sollte die Menge an ii) nicht zu hoch ausgewählt sein, da sich ansonsten die Schwitzwasserbeständigkeit verschlechtert.

Als Beispiel für epoxidgruppenhaltige Verbindungen sind Addukte von Glycidylestern einer in α-Stellung verzweigten Monocarbonsäure mit 5 Kohlenstoffatomen je Molekül mit Phosphonsäure zu nennen. Ein besonders bevorzugter Glycidylester wird unter der Handelsbezeichnung Cardura® E10 von der Fa. Revolution vertrieben.

Die Wahl dieser Ausgangsverbindungen gewährleistet in besonders effektiver Welse die pH-Wert Unabhängigkeit während der Vernetzung.

Die Aufgabe der vorliegenden Erfindungen wird ebenfalls gelöst durch ein emulgatorfreies, in wässriger Phase dispergiertes Mikrogel, erhältlich durch

a) Herstellung eines Polyacrylats (E) durch Copolymerisation

- eines Monomers (i) mit mindestens einer polymerisierbaren Doppelbindung und mindestens einer Hydroxylgruppe;
- eines Monomers (ii) mit mindestens einer polymerislerbaren Doppelbindung und mindestens einer Carboxylgruppe; und
- eines Monomers (iv) mit mindestens einer polymerisierbaren Doppelbindung und mindestens einer Phosphonsäuregruppe;

b) Vernetzung in wässriger Phase der aus Schritt a) stammenden Reaktionsmischung mit einem Aminoplastharz (C);

wobei die aus Schritt b) stammende Reaktionsmischung keiner anschließenden Emulsionspolymerisation unterzogen wird.

Das aus Schritt a) resultierende Polyacrylat (A) kann vor dem Schritt b) einer Emulsionspolymerisation mit mindestens einer Monomerverbindung (D) unterzogen werden, die mindestens eine radikalisch polymerisierbare Doppelbindung enthält.

Auch entsprechend dieser Ausführungsform liegt das erfindungsgemäße emulgatorfreie und phosphonsäuremodifizierte Mikrogel in wässriger Dispersion vor und verleiht Beschichtungszusammensetzungen, die diese Mikrogeldispersionen enthalten, eine erhöhte Strukturviskosität, so dass eine ausreichende Standsicherheit bei der Applikation gewährleistet ist.

Der besondere Vorteil aller erfindungsgemäßen emulgatorfreien und phosphonsäuremodifizierten Mikrogelen gemäß den zuvor beschriebenen Ausführungsformen ist, dass ihr Zusatz zu wasserverdünnbaren Beschichtungszusammensetzungen eine deutliche und positive Verbesserung spezieller Eigenschaften bewirkt.

Grundsätzlich ist festzustellen, dass die rheologischen Eigenschaften der unter Verwendung dieser emulgatorfreien und phosphonsäuremodifizierten Mikrogeldispersion erhältlichen wasserverdünnbaren Beschichtungszusammensetzungen gegenüber denen des Standes der Technik verbessert sind. So zeigt beispielsweise ein in der Automobilindustrie verwendbarer wasserverdünnbarer Basislack bereits bei Zusatz von 20 % an erfindungsgemäßer, emulgatorfreier Mikrogeldispersion - bezogen auf den Festkörperanteil der Beschichtungszusammensetzung - eine Viskosität von höchstens 100 mPa·s bei einer Schergeschwindigkeit von 1.000 s$^{-1}$, wobei die Trockenfilmdicke der ausgehärteten Basislackschicht 22 $\mu$m beträgt, ohne dass Läufer zu beobachten sind.

Das erfindungsgemäße emulgatorfreie und phosphonsäuremodifizierte Mikrogel eignet sich in besonderem Maße für die Herstellung und Formulierung wasserverdünnbarer Basislacke, insbesondere für solche, die in der Automobilindustrie eingesetzt werden.

Darüber hinaus verleiht die erfindungsgemäße, emulgatorfreie und phosphonsäuremodifizierte Mikrogeldispersion der farbgebenden Beschichtungszusammensetzung eine ausgezeichnete Applikationssicherheit, insbesondere im Hinblick auf Unanfälligkeit der Wolkenbildung auf.

Des weiteren wird durch den Zusatz der erfindungsgemäßen, emulgatorfreien und phosphonsäuremodifizierten Mikrogeldispersion zu farbgebenden Beschichtungszusammensetzung das Gesamteigenschaftsniveau der fertigen Mehrschichtlackierung nicht negativ beeinflusst. So zeigt die fertige Mehrschichtlackierung ausgezeichnete Eigenschaften im Hinblick auf mechanische Einflüsse (Steinschlagbeständigkeit).

Ferner ist bei den erfindungsgemäßen, emulgatorfreien und phosphonsäuremodifizierten Mikrogeldispersionen eine ausgezeichnete Verwendbarkeit zusammen mit Bindemittelsystemen auf Basis von Polyurethanen, Polyacrylaten oder Mischungen aus Polyurethanen und Polyacrylaten festzustellen. Diese gute Verwendbarkeit zeigt sich insbesondere an den guten Haftungseigenschaften des resultierenden Lackfilms auf Kunststoffsubstraten. Beschichtungszusammensetzung aus einer Kombination von Bindemittelsystemen auf Basis von Polyurethanen und/oder Polyacrylaten und den erfindungsgemäßen, emulgatorfreien Mikrogeldispersionen ergeben sehr hochwertige Beschichtungen.

In einer weiteren, ebenfalls bevorzugten Ausführungsform der vorliegenden Erfindung wird die Copolymerisation in Gegenwart eines zusätzlichen Monomers (iii) ohne Hydroxylgruppe und ohne Carboxylgruppe durchgeführt, das mindestens eine polymerisierbare Doppelbindung aufweist.

Durch die Menge an hydroxylgruppenhaltigen Monomeren kann hier die Vernetzungsdichte eingestellt werden. Bei einer geringen Menge hydroxylgruppenhaltiger Monomere in Abhängigkeit des Molekulargewichts des Polymeren liegen die Vernetzungspunkte weiter auseinander. Erhöht man die Menge hydroxylgruppenhaltiger Monomere, so sind die Vernetzungspunkte dichter angeordnet. Hierdurch wird sowohl die Orientierung der Effektpigmente, die Standsicherheit, als auch die Rheologie der die erfindungsgemäße, emulgatorfreie Mikrogeldispersion enthaltenden Beschichtungszusammensetzung positiv beeinflußt.

Das Monomer (i) kann ausgewählt sein aus den Hydroxyalkylestern der Acrylsäure, Methacrylsäure oder einer anderen $\alpha,\beta$-olefinisch ungesättigten Carbonsäure, die sich von einem Alkylenglykol ableitet, das mit der Säure verestert ist, oder die durch Umsetzung der $\alpha,\beta$-olefinisch ungesättigten Carbonsäure mit einem Alkylenoxid wie Ethylenoxid oder Propylenoxid erhältlich sind, insbesondere Hydroxyalkylestern der Acrylsäure, Methacrylsäure, Ethacrylsäure, Crotonsäure, Maleinsäure, Fumarsäure oder Itaconsäure, in denen die Hydroxyalkylgruppe bis zu 20 Kohlenstoffatome enthält, wie 2-Hydroxyethyl-, 2-Hydroxypropyl-, 3-Hydroxypropyl-, 3-Hydroxybutyl-, 4-Hydroxybutylacrylat, -methacrylat, -ethacrylat, -crotonat, -maleinat, -fumarat oder -itaconat; oder Hydroxycycloalkylester wie 1,4-Bis(hydroxymethyl)cyclohexan-, Octahydro-4,7-methano-1H-inden-dimethanol- oder Methylpropandiolmonoacrylat, -monomethacrylat, -monoethacrylat, -monocrotonat, -monomaleinat, -monofumarat oder-monoitaconat.

Auch können Umsetzungsprodukte aus cyclischen Estern, wie z. B. $\varepsilon$-Caprolacton, und den zuvor beschriebenen Hydroxyalkyl- oder -cycloalkylestern (beispielsweise unter der Bezeichnung Tone$^{®}$ M 100 der Fa. DOW Chemicals erhältlich) verwendet werden.

Bevorzugt ist das Monomer (i) ausgewählt aus der Gruppe von Hydroxyethyl(meth)acrylat, Hydroxypropyl(meth)acrylat, Hydroxybutyl(meth)acrylat und auf Hydroxy(meth)acrylatbasis verestertes $\varepsilon$-Caprolacton.

Das Monomer (ii) kann ausgewählt sein aus der Gruppe von Acrylsäure, Methacrylsäure, Ethacrylsäure, Crotonsäure, Maleinsäure, Fumarsäure oder Itaconsäure.

Bevorzugt ist das Monomer (ii) ausgewählt aus der Gruppe von Acrylsäure und Methacrylsäure.

In bezug auf das Monomer (iii) kann es sich handeln um

- vinylaromatische Verbindungen, wie z.B. Vinyltoluole, $\alpha$-Methylstyrol, p-, m- oder p-Methylstyrol, 2,5-Dimethylstyrol, p-Methoxystyrol, p-ter.-Butylstyrol, p-Dimethylaminostyrol, p-Acetamidostyrol und m-Vinylphenol, insbesondere bevorzugt Styrol;
- Ester der Acryl- oder Methacrylsäure, wie Methyl(meth)acrylat, Ethyl(meth)acrylat, Butyl(meth)-acrylat, iso-Butyl(meth)acrylat, tert.-Butyl(meth)acrylat, Isopropyl(meth)acrylat, Pentyl(meth)-acrylat, Isoamyl(meth)acrylat, Hexyl(meth)acrylat, $\alpha$-Ethylhexyl(meth)acrylat, Furfuryl(meth)-acrylat, Octyl(meth)acrylat, 3,5,5-Trimetyhlhexyl(meth)acrylat, Decyl(meth)acrylat, Lauryl(meth)-acrylat, Hexadecyl(meth)acrylat, Octadecyl(meth)acrylat, Stearyl(meth)acrylat und Ethyhltriglykol(meth)acrylat; Cyclohexyl(meth)acrylat, Isobornyl(meth)acrylat;

- Aminoethylacrylat, Aminoethylmethacrylat, Allylamin, N-Methyliminoethylacrylat oder tert.-Butylaminoethylmethacrylat;
- N,N-Di(methoxymethyl)aminoethylacrylat oder -methacrylat oder N,N-Di(butoxymethyl)amino-propylacrylat oder -methacrylat;
- (Meth)Acrylsäureamide wie (Meth)Acrylsäureamid, N-Methyl-, N-Methylol-, N,N-Dimethylol-, N-Methoxymethyl-, N,N-Di(methoxymethyl),-N-Ethoxymethyl- und/oder N,N-Di(ethoxyethyl)-(meth)acrylsäureamid;
- Acryloyloxy- oder Methacryloyloxyethyl-, propyl- oder butylcarbamat oder -allophanat; weitere Beispiele geeigneter Monomere, welche Carbamatgruppen enthalten, werden in den Patentschriften US 3 479 328, US 3 674 838, US 4 126 747, US 4 279 833 oder US 4 340 497 beschrieben;
- Epoxidgruppen enthaltende Monomere wie der Glycidylester der Acrylsäure, Methacrylsäure, Ethacrylsäure, Crotonsäure, Maleinsäure, Fumarsäure oder Itaconsäure oder Allylglycidylether.
- Ethylenisch di- oder multifunktionelle Verbindungen, vorzugsweise Diacrylate, Triacrylate und/- oder (Meth)acrylsäureester polyfunktioneller Alkohole, insbesondere Allyl(meth)acrylat, Hexandioldi(meth)acrylat, Ethylenglykoldi(meth)acrylat, Neopentylglykoldi(meth)acrylat, Butandioldi-(meth)acrylat oder Trimethylolpropantri(meth)acrylat.

Bevorzugt ist das Monomer (iii) ausgewählt aus der Gruppe der hydroxylgruppenfreien Acryl(meth)-acrylsäureestern und Styrol.

Als Monomerverbindung (D) können im Falle von hydroxylgruppenfreien Verbindungen solche der zuvor genannten Monomere (iii) eingesetzt werden; im Falle von hydroxylgruppenhaltigen Verbindungen werden solche der zuvor genannten Monomere (i) eingesetzt.

Bevorzugt handelt es sich bei dem Monomer (iv) um Vinylphosphonsäure.

Beispiele für Aminoplastharze sind beispielsweise in Römpp Lexikon Lacke und Druckfarben, Georg Thieme Verlag, 1998, Seite 29, "Aminoharze", dem Lehrbuch "Lackadditive" von Johan Bieleman, Wiley-VCH, Weinheim, New York, 1998, Seiten 242 ff., dem Buch "Paints, Coatings and Solvents", second completely revised edition, Edit. D. Stoye und W. Freitag, Wiley-VCH, Weinheim, New York, 1998, Seiten 80 ff, den Patentschriften US 4 710 542 A oder EP 0 245 700 A1 sowie in dem Artikel von B. Singh und Mitarbeiter "Carbamylmethylated Melamines, Novel Crosslinkers for the Coatings Industry", in Advanced Organic Coatings Science and Technology Series, 1991, Band 13, Seiten 193 bis 207, beschrieben.

Bevorzugt ist das Aminoplastharz ein Melaminharz, wie es beispielsweise unter der Handelsbezeichnung Cymel® 327 von der Fa. Cytec vertrieben wird.

Gemäß einer weiteren, ebenfalls bevorzugten Ausführungsform der vorliegenden Erfindung weist die in der Emulsionspolymerisation verwendete Monomerverbindung (D) mindestens eine Hydroxyl-gruppe auf.

Darüber hinaus zeigt eine diese emulgatorfreie Mikrogeldispersion enthaltende Beschichtungszusammensetzung eine ausgezeichnete Haftung, so dass sie auch in als kritisch geltenden Mehrschichtlackierungen, insbesondere in Verbindung mit Pulverklarlacken, in der Automobilserienlackierung eingesetzt werden kann.

Entsprechend einer ebenfalls bevorzugten Ausführungsform der vorliegenden Erfindung weist das Mikrogel eine Säurezahl zwischen 10 und 45 mg KOH/g auf.

Hierdurch ist eine ausreichende Stabilität der Dispersion in Wasser gewährleistet.

Diese Polymerisation weist methodisch gesehen keine Besonderheiten auf sondern erfolgt nach den üblichen und bekannten Methoden der radikalischen Emulsionspolymerisation in Gegenwart mindestens eines Polymerisationsinitiators.

Beispiele geeigneter Polymerisationsinitiatoren sind freie Radikale bildende Initiatoren wie Dialkylperoxide, wie Ditert.-Butylperoxid oder Dicumyl-peroxid; Hydroperoxide, wie Cumolhydroperoxid oder tert.-Butylhydroperoxid; Perester, wie tert.-Butylperbenzoat, tert.-Butylperpivalat, tert.-Butylper-3,5,5-trimethyl-hexanoat oder tert.-Butylper-2-ethylhexanoat; Kalium-, Natrium- oder Ammoniumperoxodisulfat; Azodinitrile wie Azobisisobutyronitril; C-C-spaltende Initiatoren wie Benzpinakolsilylether; oder eine Kombination eines nicht oxidierendem Initiators mit Wasserstoffperoxid. Bevorzugt werden wasserunlösliche Initiatoren verwendet. Die Initiatoren werden bevorzugt in einer Menge von 0,1 bis 25 Gew.-%, besonders bevorzugt von 0,75 bis 10 Gew.-%, bezogen auf das Gesamtgewicht der Monomeren, eingesetzt.

Eine Möglichkeit ist die Polymerisationsinitiierung durch ein Redoxsystem. Dieses in der Emulsionspolymerisationstechnik gut bekannte Verfahren nutzt die Tatsache aus, dass Hydroperoxide durch geeignete Reduktionsmittel schon bei sehr niedrigen Temperaturen zum radikalischen Zerfall angeregt werden.

Geeignete Reduktionsmittel sind beispielsweise Natriummetabisulfit oder dessen Formaldehydanlagerungsprodukt (Na-Hydroxymethansulfinat). Sehr gut geeignet ist auch Isoascorbinsäure. Besonders vorteilhaft ist die Kombination aus tert.-Butylhydroperoxid, (Iso)ascorbinsäure und Eisen(II)sulfat.

Die Verwendung dieser Mischung hat den Vorteil, dass die Polymerisation bei Raumtemperatur gestartet werden kann.

In den Lösungen oder den wässrigen Emulsionen werden dann die entsprechenden Monomeren mit Hilfe der vorstehend genannten radikalbildenden Initiatoren bei Temperaturen von 30 bis 95 °C, vorzugsweise 40 bis 95 °C, und bei Verwendung von Redoxsystemen bei Temperaturen von 35 bis 90 °C polymerisiert. Bei Arbeiten unter Überdruck kann die Emulsionspolymerisation auch bei Temperaturen oberhalb 100 °C durchgeführt werden.

Gleiches gilt für die Lösungspolymerisation, wenn höhersiedende organische Lösemittel und/oder Überdruck angewandt wird.

Es ist bevorzugt, dass mit dem Initiatorzulauf einige Zeit, im allgemeinen ca. I bis 15 Minuten, vor dem Zulauf der Monomeren begonnen wird. Ferner ist ein Verfahren bevorzugt, bei dem die Initiatorzugabe zum gleichen Zeitpunkt wie die Zugabe der Monomeren begonnen und etwa eine halbe Stunde, nachdem die Zugabe der Monomeren beendet worden ist, beendet wird. Der Initiator wird vorzugsweise in konstanter Menge pro Zeiteinheit zugegeben. Nach Beendigung der Initiatorzugabe wird das Reaktionsgemisch noch so lange (in der Regel 1 bis 1,5 Stunden) auf Polymerisationstemperatur gehalten, bis alle eingesetzten Monomere im wesentlichen vollständig umgesetzt worden sind. "Im wesentlichen vollständig umgesetzt" soll bedeuten, dass vorzugsweise 100 Gew.-% der eingesetzten Monomere umgesetzt worden sind, dass es aber auch möglich ist, dass ein geringer Restmonomerengehalt von höchstens bis zu etwa 0,5 Gew.-%, bezogen auf das Gewicht der Reaktionsmischung, unumgesetzt zurückbleiben kann.

Als Reaktoren für die Pfropfmischpolymerisation kommen die üblichen und bekannten Rührkessel, Rührkesselkaskaden, Rohrreaktoren, Schlaufenreaktoren oder Taylorreaktoren, wie sie beispielsweise in der Patentschrift DE 10 71 241 B1, den Patentanmeldungen EP 0 498 583 A1 oder DE 198 28 742 A1 oder in dem Artikel von K. Kataoka in Chemical Engineering Science, Band 50, Heft 9, 1995, Seiten 1409 bis 1416, beschrieben werden, in Betracht.

Die zuvor beschriebene emulgatorfreie Mikrogeldispersion eignet sich erfindungsgemäß besonders zur Herstellung einer Mehrschichtlackierung, insbesondere in der Automobilindustrie.

Ganz besonders bevorzugt ist die Verwendung der emulgatorfreien Mikrogeldispersion in der farbgebenden Beschichtungszusammenseuung, d.h. in einem Basislack.

Die besten Ergebnisse in bezug auf rheologische, mechanische und optische Eigenschaften werden erzielt, wenn der Anteil an Mikrogel, bezogen auf den Festkörper der daraus erhältlichen Schicht, zwischen 20 und 85 %, vorzugsweise zwischen 20 und 65 %, liegt.

Auch ist überraschend, dass die erfindungsgemäßen, emulgatorfreien Mikrogeldispersionen neben den üblichen Schichtsilikaten in wasserverdünnbaren Basislacken eingesetzt werden können. In diesem Fall zeigen die daraus resultierenden Lackfilme nicht die unzureichende Schwitzwasserbeständigkeit, verglichen mit Basislacken ohne Zusatz der erfindungsgemäßen Mikrogeldispersion.

Für die erfindungsgemäße Verwendung kann die Mehrschichtlackierung aus drei voneinander verschiedenen Schichten bestehen, d.h. aus

1) einer ersten, auf dem elektrisch leitfähigen Substrat befindlichen Schicht aus einem elektrophoretisch abgeschiedenen Überzugsmittel;
2) einer zweiten, farbgebenden Schicht, erhältlich aus einer wasserverdünnbaren Beschichtungszusammensetzung, die die erfindungsgemäße emulgatorfreie Mikrogeldispersion enthält; und
3) einer dritten Schicht aus einem Klarlack.

Bei dieser Mehrschichtlackierung aus insbesondere nur drei voneinander unterschiedlichen Schichten ist hervorzuheben, dass die resultierende Mehrschichtlackierung auch eine ausreichende Steinschlagbeständigkeit aufweist, die auf die besonderen Eigenschaften des das emulgatorfreie Mikrogel der vorliegenden Erfindung enthaltenden wasserverdünnbaren Basislacks zurückzuführen ist.

Ebenso ist es möglich, dass die Mehrschichtlackierung aus vier voneinander verschiedenen Schichten bestehen, d.h. aus

1) einer ersten, auf dem elektrisch leitfähigen Substrat befindlichen Schicht aus einem elektrophoretisch abgeschiedenen Überzugsmittel;
2) einer zweiten Schicht aus einer Grundierung oder einem Füller;
3) einer dritten, farbgebenden Schicht, erhältlich aus einer wasserverdünnbaren Beschichtungszusammensetzung, die die erfindungsgemäße emulgatorfreie Mikrogeldispersion enthält; und
4) einer vierten Schicht aus einem Klarlack.

Ein Vorteil in diesem Vierschichtaufbau ist, dass die ausgehärtete farbgebende Schicht die Steinschlagschutzeigenschaften der Füllerschicht noch weiter positiv beeinflußt.

Durch die Verwendung des erfindungsgemäßen, emulgatorfreien Mikrogels kann eine - bezogen auf herkömmliche Basislacke - wesentlich höhere Schichtdicke erreicht werden. Die Dicke der ausgehärteten, aus einer die erfindungsgemäße emulgatorfreie Mikrogeldispersion enthaltenden Beschichtungszusammensetzung hergestellten Schicht kann zwischen 15 und 55 $\mu$m liegen.

Bei den elektrophoretisch abzuscheidenden Überzugsmitteln handelt es sich um wässrige Beschichtungszusammensetzungen mit einem Festkörper von etwa 10 bis 20 Gew.-%, die üblicherweise Bindemittel, ionische oder in ionische Gruppen überführbare Substituenten sowie zur chemischen Vernetzung fähige Gruppen tragen, sowie Pigmente und weitere übliche Additive enthalten.

Beispiele für solche Elektrotauchlacke sind in DE 28 24 418 A1, DE 33 24 211 A1, EP 0 082 291, EP 0 178 531, EP 0 227 975, EP 0 234 395, EP 0 245 786, EP 0 261, 385, EP 0 310 971, EP 0 333 327, EP 0 414 199, EP 0 456 270, EP 0 476 514 und US 3 922 253 beschrieben.

Die Klarlackschicht, die bei einer Mehrschichtlackierung für Automobile über der farbgebenden Basislackschicht angeordnet ist, kann erhalten werden durch Aufbringen und Einbrennen einer üblichen, lösemittelhaltigen oder wässrigen Klarlackzusammensetzung, die als Einkomponenten- oder Zweikomponentenmischung vorliegt und ein oder mehrere Basisharze als filmbildende Bindemittel enthält. Sofern die Bindemittel nicht selbstvernetzend sind, kann die Klarlackzusammensetzung gegebenenfalls auch Vernetzer enthalten. Als filmbildende Bindemittel (Basisharze) können beispielsweise Polyester-, Polyurethan- und/oder Poly(meth)acrylatharze verwendet werden.

Neben den chemisch vernetzenden Bindemitteln sowie gegebenenfalls Vernetzern können diese Klarlacke lackübliche Hilfsstoffe, wie z.B. Katalysatoren, Verlaufsmittel und Lichtschutzmittel enthalten.

Beispiele für lösemittelhaltige Klarlackzusammensetzungen in Einkomponenten- oder Zweikomponentenmischung sind in DE 38 26 693 A1, DE 40 17 075 A1, DE 41 24 167 A1, DE 41 33 704 A1, DE 42 04 518 A1, DE 42 04 611 A1, EP 0 257 513, EP 0 408 858, EP 0 523 267 und EP 0 557 822 beschrieben.

Beispiele für wässrige Klarlackzusammensetzungen in Einkomponenten- oder Zweikomponentenmischung sind in DE 39 10 829 A1, DE 40 09 931 A1, DE 40 09 932 A1, DE 41 01 696 A1, DE 41 32 430 A1, DE 41 34 290 A1, DE 42 03 510 A1, EP 0 365 098, EP 0 365 775, EP 0 469 079 und EP 0 546 640, insbesondere in der DE 44 19 216 A1 und DE 44 42 518 A1, beschrieben.

Auch kann die Klarlackschicht aus einem Pulverklarlack oder einer Pulverklarlackslurry hergestellt werden. In bezug auf den Pulverklarlack oder die Pulverklarlackslurry wird auf die DE 42 22 194 A1, DE 42 27 580 A1, EP 0 509 392, EP 0 509 393, EP 0 522 648, EP 0 544 206, EP 0 555 705, EP 0 652 265, EP 0 666 779 sowie auf die EP 0 714 958 verwiesen.

Es ist aber auch möglich, die erfindungsgemäße Mikrogeldispersion in eine nicht-wässrige Phase zu überführen und in lösemittelhaltigen Beschichtungszusammensetzungen einzusetzen.

Um zu Mikrogelen in nicht-wässriger Phase zu gelangen, muss den erfindungsgemäßen, in wässriger Phase vorliegenden Mikrogelen das Wasser entzogen werden.

Dies kann durch jedes bekannte Verfahren, beispielsweise durch Sprühtrocknen, Gefriertrocknen oder Eindampfen, gegebenenfalls unter vermindertem Druck, geschehen.

Nach dem Wasserentzug kann das erfindungsgemäße Mikrogel in Pulverform oder als harzartige Masse vorliegen.

Gemäß einer bevorzugten Variante wird das in wässriger Phase vorliegende Mikrogel in eine flüssige organische Phase überführt. Dies kann durch eine azeotrope Destillation geschehen. Hierbei kann man so verfahren, dass die wässrige, emulgatorfreie Mikrogeldispersion bei erhöhter Temperatur, gegebenenfalls unter vermindertem Druck, kontinuierlich oder diskontinuierlich in einen Reaktor gegeben wird, der ein Schleppmittel, d.h. ein Lösemittel oder ein Gemisch mehrerer Lösemittel, von denen mindestens eines ein Azeotrop mit Wasser bildet, enthält.

Der Reaktor ist mit einer geeigneten Kondensierungsvorrichtung und einem Wasserabscheider mit Rücklauf zum Reaktor ausgestattet. Nach Erreichen der Siedetemperatur des Azeotropes steigt die gasförmige azeotrope Phase (d.h. Schleppmittel und Wasser) in die Kondensierungsvorrichtung auf. Dort kondensiert das Azeotrop und läuft von dort in den Wasserabscheider. Im Wasserabscheider erfolgt eine Phasentrennung zwischen dem Schleppmittel und dem Wasser. Bei einer kontinuierlich durchgeführten azeotropen Destillation fließt das Schleppmittel wieder zurück in den Reaktor, so dass nur geringe Mengen an Schleppmittel eingesetzt werden müssen. Das aus dem Wasserabscheider erhaltene Wasser ist frei von organischen Bestandteilen und kann erneut zur Herstellung der erfindungsgemäßen wässrigen Mikrogeldispersion eingesetzt werden.

Das Schleppmittel kann aus der Gruppe von Xylol, Butylacetat, Methylisobutylketon, Methylamylketon, Pentanol, Hexanol oder Ethylhexanol ausgewählt sein.

Ein wesentlicher Vorteil hierbei ist, dass das Schleppmittel nach erfolgter Überführung in die organische Phase dort verbleibt und für die Verwendung lösemittelhaltiger Beschichtungszusammensetzungen von Vorteil ist. Hinsichtlich der weiteren Verwendung dieser in organischer Phase vorliegenden Mikrogele zur Herstellung von lösemittelhaltigen Beschichtungszusammensetzungen handelt es sich bei den genannten Schleppmitteln um geeignete Lösemittel.

Dieses Verfahren zeichnet sich aufgrund der gleichzeitigen Wiederverwendung des Schleppmittels und des anfallenden Wassers ohne zusätzliche Verfahrensschritte durch ein außerordentliches Maß an Umweltverträglichkeit aus, da keine zu entsorgende Nebenprodukte entstehen, die im Vergleich mit bekannten Herstellungsverfahren in großen Mengen anfallen.

In einer besonderen Form der azeotropen Destillation wird diese dergestalt durchgeführt, dass die wässrige emulgatorfreie Mikrogeldispersion in ein Gemisch eines Schleppmittels und einem hochsiedenden, organischen Lösemittel gegeben wird. Dieses hochsiedende, organische Lösemittel verhindert während der Überführung in die organische Phase ein Anbacken der Mikrogele an der Wand des Reaktors.

Das hochsiedende Lösemittel kann aus der Gruppe der Glykolester, wie z.B. Butylglykolacetat und/oder Butyldiglykolacetat ausgewählt sein.

Wie im Falle des Schleppmittels handelt es sich bei dem hochsiedenden Lösemittel ebenfalls um eine für eine lösemittelhaltige Beschichtungszusammensetzung übliche Komponente.

Das auf diese Weise erhältliche Mikrogel kann insbesondere für lösemittelhaltige Beschichtungszusammensetzungen verwendet werden.

Eine bevorzugte Verwendungsform der Erfindung ist der Einsatz in lösemittelhaltigen Basislacken, insbesondere Effektbasislacken und Klarlacken, für die Decklackierung bzw. Lackierung von Automobilen.

Dieses in organischer Phase vorliegende Mikrogel verleiht diesen lösemittelhaltigen Beschichtungszusammensetzungen ebenfalls ein ausgezeichnetes Applikationsverhalten und hervorragende dekorative Eigenschaften, die sich beispielsweise anhand eines ausgeprägten Metalliceffekts, einer sehr guten Resistenz gegen Ablaufen in der Vertikalen (SCA - Sagging Control Agent), Wolkenfreiheit, Resistenz gegen Wiederanlösen durch Klarlack, gute Schleifriefenabdeckung und der Erfüllung der in der Automobilindustrie üblichen Eigenschaftsvorgaben zeigen.

Die Mikrogele können ebenso gut für die Herstellung von lösemittelhaltigen Klarlacken, Coil-Coatingzusammensetzungen und Einbrennlacken für industrielle Anwendungen sowie Anstrichfarben für den Bautensektor verwendet werden.

Eine weitere Besonderheit dieses Mikrogels liegt in seiner hohen Scherbeständigkeit. Diese Eigenschaft ermöglicht erstmals eine Verwendung solcher Mikrogele zur Herstellung von Pigmentzubereitungen, insbesondere als Anreibemittel für Tönpasten. Hierdurch wird erreicht, dass die so hergestellten Tönpasten einen hohen Pigmentgehalt bei gleichzeitig niedriger Viskosität aufweisen.

**BEISPIELE:**

**Herstellung der Ausgangsprodukte**

**Acrylatdispersion 1:**

In einem 2 l Reaktionsgefäß mit Rührer und einem Zulaufgefäß werden 305 g Butylglykol eingewogen und auf 120°C aufgeheizt. Bei 120°C wird aus dem Zulaufgefäß eine Mischung aus 40 g Styrol, 53,3 g Butylmethacrylat, 462,3 g Laurylacrylat, 152,4 g 2-Hydroxyethylacrylat, 6,5 g Vinylphosphonsäure, 41,6 g Acrylsäure und 15,1 g tert.-Butylper-2-ethylhexanoat innerhalb von 2 Stunden gleichmäßig zudosiert. Nach Beendigung des Zulaufes wird 0,5 Stunden nachpolymerisiert. Anschließend wird eine Mischung aus 7,2 g Butylglykol und 1,5 g tert.-Butylper-2-ethylhexanoat innerhalb von 0,1 Stunden zudosiert. Nach Beendigung dieses Zulaufs wird 1,5 Stunden nach polymerisiert.

Danach wird eine Mischung aus 14,3 g Dimethylethanolamin und 970 g vollentsalztes Wasser zugegeben. Man erhält eine stabile Dispersion mit einer Säurezahl von 47 und einem Festkörpergehalt von 36 % (30 Minuten bei 180 °C).

**Acrylatdispersion 2:**

In einem 2 l Reaktionsgefäß mit Rührer und einem Zulaufgefäß werden 300 g Butylglykol eingewogen und auf 120°C aufgeheizt. Bei 120°C wird aus dem Zulaufgefäß eine Mischung aus 146,4 g 2-Ethylhexylacrylat, 120 g Styrol, 160 g Butylmethacrylat, 255,2 g Polypropylenglykolmonomethacrylat mit einem mittleren Molekulargewicht von 350, 105 g 4-Hydroxybutylacrylat, 7,2 g Vinylphosphonsäure, 46,2 g Acrylsäure und 23,2 g tert.-Butylper-2-ethylhexanoat innerhalb von 3 Stunden gleichmäßig zudosiert. Nach Beendigung des Zulaufes wird 0,5 Stunden nachpolymerisiert. Anschließend wird eine Mischung aus 7,2 g Butylglykol und 1,5 g tert.-Butylper-2-ethylhexanoat innerhalb von 0,1 Stunden zudosiert. Nach Beendigung dieses Zulaufs wird 1,5 Stunden nachpolymerisiert

Danach wird eine Mischung aus 18,7 g Dimethylethanolamin und 850 g vollentsalztes Wasser zugegeben. Man erhält eine stabile Dispersion mit einer Säurezahl von 47 und einem Festkörpergehalt von 41 % (30 Minuten bei 180 °C).

**Polyurethandispersion (für Anwendungsbeispiel):**

In einem 6 l Reaktionsgefäß mit Rückflußkühler werden 602,3 g eines Polyesters mit einem zahlen- mittleren Molekulargewicht von 1440 auf Basis einer dimerisierten Fettsäure (Pripol® 1013 der Firma Unichema) und 1,6-Hexandiol mit einer Säurezahl unter 3, 56 g Dimethylolpropionsäue, 306,2 g Tetramethylxylylendiisocyanat, 241 g Methylethylketon und 0,9 g Dibutylzinndilaurat eingewogen. Diese Mischung wird solange bei 80°C gehalten, bis der Isocyanatgehalt 2,35 % beträgt. Anschließend werden 90,4 g Trimethylolpropan und 23 g Methyethylketon zugegeben und bei 80°C auf einen Isocyanatgehalt von < 0,03 % gefahren. Danach werden eine Mischung aus 33,5 g Diemethylethanolamin und 1085 g vollentsalztem Wasser und anschließend 1598 g vollenualztes Wasser zugegeben. Nach einer Vakuumdestillation, in der das Methylethylketon entfernt wird, erhält man eine Dispersion mit einem Festkörpergehalt von 28 % (60 Minuten bei 120 °C).

**Polyesterdispersion (für Anwendungsbeispiel):**

In einem 4 l Reaktionsgefäß mit Rührer und Füllkörperkolonne werden 332,8 g Neopentylglykol, 283,2 g 1,6 Hexandiol, 696 g einer dimerisierten Fettsäure (Pripol® 1013 der Firma Unichema) und 184,2 g Hexahydrophthalsäureanhydrid eingewogen und so aufgeheizt, daß die Kolonnenkopftemperatur 100°C nicht überschreitet. Die max. Veresterungstemperatur beträgt 230°C. Bei einer Säurezahl unter 10 wird abgekühlt. Bei 150°C werden 307,2 g Trimellithsäureanhydrid zugegeben und so aufgeheizt, daß die Kolonnenkopftemperatur 100°C nicht überschreitet. Die max. Veresterungstemperatur beträgt 180°C. Bei einer Säurezahl von 30 wird abgekühlt. Man erhält einen Polyester mit einem berechneten Molekulargewicht von 1870 und einer Hydroxylzahl von 83.

Bei einer Temperatur unterhalb 100°C werden eine Mischung aus 42,7 g Dimethylethanolamin und 1380 g vollentsalztem Wasser zudosiert und nachfolgend 1910 g vollentsalztes Wasser zugegeben. Man erhält eine stabile Dispersion mit einem Festkörpergehalt von 30 % (60 Minuten bei 120 °C).

**Herstellung der erfindungsgemäßen Mikrogeldispersionen**

**Mikrogeldispersion 1:**

In einem 2 l Reaktionsgefäß mit Rückflußkühler werden 834,7 g der Acrylatdispersion I, eingewogen und unter Rühren nacheinander 139,9 g eines handelsüblichen Melaminharzes (Cymel® 327 der Firma Dyno Cytec), 1 g Dimethylethanolamin und 580 g vollentsalztes Wasser dem Ansatz zugegeben. Es wird auf 95°C erhitzt und 7 Stunden bei 95°C kondensiert. Danach wird abgekühlt und 14 g Dimethylethanolamin dem Ansatz zugegeben.

Man erhält eine stabile Dispersion mit einem Festkörpergehalt von 24 % (60 Minuten bei 120°C). Eine Probe dieser Dispersion mit Tetrahydrofuran verdünnt zeigt eine starke Trübung.

**Mikrogeldispersion 2:**

In einem 2 l Reaktionsgefäß mit Rückflußkühler werden 830,7 g der Acrylatdispersion 2, eingewogen und unter Rühren nacheinander 162,3 g eines handelsüblichen Melaminharzes (Cymel® 327 der Firma Dyno Cytec) und 800 g vollentsalztes Wasser dem Ansatz zugegeben. Es wird auf 94°C erhitzt und 10 Stunden bei 94°C kondensiert. Danach wird abgekühlt und 11,9 g Dimethylethanolamin dem Ansatz zugegeben.

Man erhält eine stabile Dispersion mit einem Festkörpergehalt von 24 % (60 Minuten bei 120°C). Eine Probe dieser Dispersion mit Tetrahydrofuran verdünnt zeigt eine starke Trübung.

**Verwendung der erfindungsgemäßen Mikrogeldispersionen**

**Anwendungsbeispiel 1:**

Zur Herstellung eines Metallic-Wasserbasislackes werden 107,1 g der Polyurethandispersion und 312.5 g der erfindungsgemäßen Mikrogeldispersion I, eine Mischung aus 50 g Polyesterdispersion, 0,4 g Dimethylethanolamin und 35 g vollentsalztem Wasser, 16,6 g eines handelsüblichen Melaminharzes (Cymel® 327 der Firma Dyno Cytec), 42,9 g einer handelsüblichen Aluminiumbronze, vorher angeteigt in 56,2 g Butylglykol und 31,6 g n-Butanol und einer Mischung aus 24,6 g eines handelsüblichen Acrylatverdickers (Latekoll® D der Firma BASF) und 46 g vollentsalztem Wasser zu einem Lack verarbeitet. Mit Dimethylethanolamin wird der pH-Wert auf 8,00 bis 8,30 und mit vollentsalztem Wasser auf eine Viskosität von 100 mPas eingestellt (gemessen bei 1000 s⁻¹).

**Anwendungsbeispiel 2:**

Es wird so verfahren wie in Beispiel I. Jedoch werden die 312,5 g Mikrogeldispersion 1 ausgetauscht durch 312,5 g der erfindungsgemäßen Polymerdispersion 2.

**Visuelle Prüfung:**

Die nach den zuvor beschriebenen Anwendungsbeispielen hergestellten wässrigen Basislacke werden durch Spritzapplikation jeweils auf einem Stahlblech mit einer Größe von 70 x 70 cm in einer klimatisierten Spritzkabine so aufgebracht, daß eine Trockenschichtdicke von 15 - 18 $\mu$m erhalten wird. Nach 5 Minuten Ablüftzeit werden die Bleche jeweils mit einem handelsüblichen Automobilserienklarlack mit einer Trockenschichtdicke von 40 - 45 $\mu$m versehen und die Schichten anschließend 30 Minuten bei 140 °C eingebrannt.

Durch den Einsatz der erfindungsgemäßen Mikrogeldispersionen werden Lackierungen erhalten, die sich durch sehr gute Aluminiumorientierung, keine Wolkenbildung sowie durch einen ausgezeichneten Decklackstand auszeichnen.

**Patentansprüche**

1. Emulgatorfreies, in wässriger Phase dispergiertes Mikrogel, erhältlich durch

   a) Herstellung eines Polyacrylats (A) in Gegenwart mindestens einer eine Phosphonsäuregruppe aufweisenden Verbindung (B), wobei das Polyacrylat (A) mindestens eine Hydroxylgruppe und mindestens eine Carboxylgruppe aufweist;
   b) Vernetzung in wässriger Phase der aus Schritt a) stammenden Reaktionsmischung mit einem Aminoplastharz (C);
   **dadurch gekennzeichnet, dass** die aus Schritt b) stammende Reaktionsmischung keiner anschließenden Emulsionspolymerisation unterzogen wird.

2. Emulgatorfreies Mikrogel nach Anspruch 1, **dadurch gekennzeichnet, dass** das aus Schritt a) resultierende Polyacrylat (A) vor dem Schritt b) einer Emulsionspolymerisation mit mindestens einer Monomerverbindung (D) unterzogen wird, die mindestens eine radikalisch polymerisierbare Doppelbindung enthält.

3. Emulgatorfreies Mikrogel nach Anspruch 1 der 2, **dadurch gekennzeichnet, dass** das Polyacrylat (A) erhältlich ist durch Polymerisation

   • eines Monomers (i) mit mindestens einer polymerisierbaren Doppelbindung und mindestens einer Hydroxylgruppe;
   • eines Monomers (ii) mit mindestens einer polymerisierbaren Doppelbindung und mindestens einer Carboxylgruppe; und
   • eines Monomers (iii) ohne Hydroxylgruppe und ohne Carboxylgruppe mit mindestens einer polymerisierbaren Doppelbindung.

4. Emulgatorfreies, in wässriger Phase dispergiertes Mikrogel, erhältlich durch

   a) Herstellung eines Polyacrylats (E) durch Copolymerisation

      • eines Monomers (i) mit mindestens einer polymerisierbaren Doppelbindung und mindestens einer Hydroxylgruppe;
      • eines Monomers (ii) mit mindestens einer polymerisierbaren Doppelbindung und mindestens einer Carboxylgruppe; und
      • eines Monomers (iv) mit mindestens einer polymerisierbaren Doppelbindung und mindestens einer Phosphonsäuregruppe;

   b) Vernetzung in wässriger Phase der aus Schritt a) stammenden Reaktionsmischung mit einem Aminoplastharz (C);
   **dadurch gekennzeichnet, dass** die aus Schritt b) stammende Reaktionsmischung keiner anschließenden Emulsionspolymerisation unterzogen wird.

5. Mikrogel nach Anspruch 4, **dadurch gekennzeichnet, dass** das aus Schritt a) resultierende Polyacrylat (E) vor dem Schritt b) einer Emulsionspolymerisation mit mindestens einer Monomerverbindung (D) unterzogen wird, die mindestens eine radikalisch polymerisierbare Doppelbindung enthält.

6. Mikrogel nach Anspruch 4 oder 5 **dadurch gekennzeichnet, dass** die Copolymerisation in Gegenwart eines zusätzliche Monomers (iii) ohne Hydroxylgruppe und ohne Carboxylgruppe durchgeführt wird, das mindestens eine polymerisierbare Doppelbindung aufweist.

7. Mikrogel nach einem der Ansprüche 3 bis 6, **dadurch gekennzeichnet, dass** das Monomer (i) ausgewählt ist aus der Gruppe von Hydroxyethyl(meth)acrylat, Hydroxypropyl(meth)acrylat, Hydroxyburyl(meth)acrylat und auf Hydroxy(meth)acrylatbasis verestertes ε-Caprolacton.

8. Mikrogel nach einem der Ansprüche 3 bis 7, **dadurch gekennzeichnet, dass** das Monomer (ii) ausgewählt ist aus der Gruppe von Acrylsäure und Methacrylsäure.

9. Mikrogel nach einem der Ansprüche 3 bis 8, **dadurch gekennzeichnet, dass** das Monomer (iii) ausgewähk ist aus der Gruppe der hydroxylgruppenfreien Acryl(meth)acrylsäureestern und Styrol.

10. Mikrogel nach einem der Ansprüche 4 bis 9 **dadurch gekennzeichnet, dass** das Monomer (iv) Vinylphosphonsäure ist.

11. Mikrogel nach einem der vorhergehenden Ansprüche, **dadurch gekennzeichnet, dass** das Aminoplastharz ein Melaminharz ist.

12. Microgel nach einem der Ansprüche 2 bis 3 oder 5 bis 11, **dadurch gekennzeichnet, dass** mindestens eine Monomerverbindung (D) keine Hydroxylgruppen enthält

13. Mikrogel nach Anspruch 12, **dadurch gekennzeichnet, dass** zusätzlich mindestens eine Monomerverbindung (D) mindestens eine Hydroxylgruppe aufweist.

14. Microgel nach einem der vorhergehenden Ansprüche, **dadurch gekennzeichnet, dass** es eine Säurezahl zwischen 10 und 45 mg KOH/g aufweist.

15. Verwendung einer emulgatorfreien Mikrogeldispersion nach einem der vorhergehenden Ansprüche zur Herstellung einer Mehrschichtlackierung insbesondere in der Automobilindustrie.

16. Verwendung nach Anspruch 15 zur Herstellung eines Basistacks.

17. Verwendung nach Anspruch 15 oder 16 **dadurch gekennzeichnet, dass** der Anteil an Mikrogel, bezogen auf den Festkörper der daraus erhältlichen Schicht, zwischen 20 und 85 %, vorzugsweise zwischen 20 und 65 %, liegt.

**Claims**

1. Emulsifier-free microgel dispersed in an aqueous phase, obtainable by

   a) producing a polyacrylate (A) in the presence of at least one compound (B) containing a phosphonic acid group, where the polyacrylate (A) has at least one hydroxyl group and at least one carboxyl group;
   b) aqueous phase crosslinking of the reaction mixture originating from step a) with an aminoplast resin (C);
   **characterised in that** the reaction mixture originating from step b) is not subjected to any subsequent emulsion polymerisation.

2. Emulsifier-free microgel according to claim 1 wherein the polyacrylate (A) resulting from step a) is subjected, before step b), to an emulsion polymerisation with at least one monomer compound (D) which contains at least one free radical polymerisable double bond.

3. Emulsifier-free microgel according to claim 1 or 2, wherein the polyacrylate (A) is obtainable by polymerization

   • of a monomer (i) with at least one polymerizable double bond and at least one hydroxyl group;
   • of a monomer (ii) with at least one polymerizable double bond and at least one carboxyl group; and
   • of a monomer (iii) without a hydroxyl group and without a carboxyl group with at least one polymerizable double bond.

4. Emulsifier-free microgel dispersed in an aqueous phase obtainable by

   a) producing a polyacrylate (E) by copolymerization

      • of a monomer (i) with at least one polymerizable double bond and at least one hydroxyl group;

- of a monomer (ii) with at least one polymerizable double bond and at least one carboxyl group; and
- of a monomer (iv) with at least one polymerizable double bond at and at least one phosphonic acid group;

b) aqueous phase crosslinking of the reaction mixture originating from step a) with an aminoplast resin (C);
**characterised in that** the reaction mixture originating from step b) is not subjected to any subsequent emulsion polymerisation.

**5.** Microgel according to claim 4 wherein the polyacrylate (E) resulting from step a) is subjected, before step b), to an emulsion polymerisation with at least one monomer compound (D) which contains at least one free radical polymerisable double bond.

**6.** Emulsifier-free microgel according to claims 4 or 5, wherein the copolymerization is carried out in the presence of an additional monomer (iii) without a hydroxyl group and without a carboxyl group having at least one polymerizable double bond.

**7.** Microgel according to one of the claims 3 to 6, wherein the monomer (i) is selected from the group of hydroxyethyl(meth)acrylate, hydroxypropyl(meth)acrylate, hydroxybutyl(meth)acrylate and ε-caprolactone estered on a hydroxy(meth)acrylate basis.

**8.** Microgel according to one of the claims 3 to 7, wherein the monomer (ii) is selected from the group of acrylic acid and methylacrylic acid.

**9.** Microgel according to one of the claims 3 to 8, wherein the monomer (iii) is selected from the group of hydroxyl group-free acryl(meth)acrylic acid esters and styrene.

**10.** Microgel according to one of the claims 4 to 9, wherein the monomer (iv) is vinyl phosphonic acid.

**11.** Microgel according to one of the preceding claims, wherein the aminoplast resin is a melamine resin.

**12.** Microgel according to one of the claims 2 to 3 or 5 to 11, wherein at least one monomer compound (D) has no hydroxyl group.

**13.** Microgel according to claim 12, wherein at least one monomer compound (D) has at least one hydroxyl group.

**14.** Microgel according to one of the preceding claims, wherein it has an acid number between 10 and 45 mg KOH/g.

**15.** Use of an emulsifier-free microgel dispersion according to one of the preceding claims for preparing a multilayer coating, especially in the automotive industry.

**16.** Use according to claim 15 for preparing a basecoat.

**17.** Use according to claim 15 or 16, wherein the microgel percentage, relative to the solids of the coat obtainable therefrom, is between 20 and 85%, preferably between 20 and 65%.

**Revendications**

**1.** Microgel exempt d'émulsifiant, dispersé en phase aqueuse, pouvant être obtenu par

a) préparation d'un polyacrylate (A) en présence d'au moins un composé (B) comportant un groupe phosphono, le polyacrylate (A) comportant au moins un groupe hydroxy et au moins un groupe carboxy ;
b) réticulation en phase aqueuse du mélange réactionnel provenant de l'étape a), à l'aide d'une résine aminoplaste (C) ;
**caractérisé en ce que** le mélange réactionnel provenant de l'étape b) n'est pas soumis à une polymérisation en émulsion subséquente.

**2.** Microgel exempt d'émulsifiant selon la revendication 1, **caractérisé en ce que** le polyacrylate (A) obtenu à l'étape a) est soumis avant l'étape b) à une polymérisation en émulsion avec au moins un composé monomère (D) qui comporte au moins une double liaison apte à la polymérisation radicalaire.

3. Microgel exempt d'émulsifiant selon la revendication 1 ou 2, **caractérisé en ce que** le polyacrylate (A) peut être obtenu par polymérisation

    • d'un monomère (i) comportant au moins une double liaison apte à la polymérisation et au moins un groupe hydroxy ;
    • d'un monomère (ii) comportant au moins une double liaison apte à la polymérisation et au moins un groupe carboxy ; et
    • d'un monomère (iii) sans groupe hydroxy et sans groupe carboxy, comportant au moins une double liaison apte à la polymérisation.

4. Microgel exempt d'émulsifiant, dispersé en phase aqueuse, pouvant être obtenu par

    a) préparation d'un polyacrylate (E) par copolymérisation

        • d'un monomère (i) comportant au moins une double liaison apte à la polymérisation et au moins un groupe hydroxy ;
        • d'un monomère (ii) comportant au moins une double liaison apte à la polymérisation et au moins un groupe carboxy ; et
        • d'un monomère (iv) comportant au moins une double liaison apte à la polymérisation et au moins un groupe phosphono ;

    b) réticulation en phase aqueuse du mélange réactionnel provenant de l'étape a), à l'aide d'une résine aminoplaste (C) ;
    **caractérisé en ce que** le mélange réactionnel provenant de l'étape b) n'est pas soumis à une polymérisation en émulsion subséquente.

5. Microgel selon la revendication 4, **caractérisé en ce que** le polyacrylate (E) obtenu à l'étape a) est soumis avant l'étape b) à une polymérisation en émulsion avec au moins un composé monomère (D) qui comporte au moins une double liaison apte à la polymérisation radicalaire.

6. Microgel selon la revendication 4 ou 5, **caractérisé en ce qu'**on effectue la copolymérisation en présence d'un monomère supplémentaire (iii) sans groupe hydroxy et sans groupe carboxy, qui comporte au moins une double liaison apte à la polymérisation.

7. Microgel selon l'une quelconque des revendications 3 à 6, **caractérisé en ce que** le monomère (i) est choisi dans le groupe constitué par le (méth)-acrylate d'hydroxyéthyle, le (méth)acrylate d'hydroxypropyle, le (méth)acrylate d'hydroxybutyle et une ε-caprolactone estérifiée à base d'hydroxy(méth)acrylate.

8. Microgel selon l'une quelconque des revendications 3 à 7, **caractérisé en ce que** le monomère (ii) est choisi dans le groupe constitué par l'acide acrylique et l'acide méthacrylique.

9. Microgel selon l'une quelconque des revendications 3 à 8, **caractérisé en ce que** le monomère (iii) est choisi dans le groupe constitué par les esters d'acide acryl(méth)acrylique exempts de groupes hydroxy et le styrène.

10. Microgel selon l'une quelconque des revendications 4 à 9, **caractérisé en ce que** le monomère (iv) est l'acide vinylphosphonique.

11. Microgel selon l'une quelconque des revendications précédentes, **caractérisé en ce que** la résine aminoplaste est une résine mélamine.

12. Microgel selon l'une quelconque des revendications 2 à 3 ou 5 à 11, **caractérisé en ce qu'**au moins un composé monomère (D) ne comporte pas de groupes hydroxy.

13. Microgel selon la revendication 12, **caractérisé en ce qu'**en plus au moins un composé monomère (D) comporte au moins un groupe hydroxy.

**14.** Microgel selon l'une quelconque des revendications précédentes, **caractérisé en ce qu'**il présente un indice d'acide compris entre 10 et 45 mg de KOH/g.

**15.** Utilisation d'une dispersion de microgel exempte d'émulsifiant selon l'une quelconque des revendications précédentes, pour la production d'un revêtement de peinture multicouche, en particulier dans l'industrie de l'automobile.

**16.** Utilisation selon la revendication 15, pour la production d'une peinture de fond.

**17.** Utilisation selon la revendication 15 ou 16, **caractérisée en ce que** la teneur en microgel, par rapport à la matière solide de la couche pouvant être obtenue à partir de celui-ci, est comprise entre 20 et 85 %, de préférence entre 20 et 65 %.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0281936 A
- EP 0030439 A
- EP 0242235 A1
- EP 0030439 B1
- EP 0038127 B1
- EP 0029637 A1
- GB 2159161 A
- EP 0502934 A
- EP 1156089 A1
- US 4245036 A
- DE 19504015 A1
- WO 9624619 A1
- WO 0063265 A
- WO 0063266 A
- US 3479328 A
- US 3674838 A
- US 4126747 A
- US 4279833 A
- US 4340497 A
- US 4710542 A
- EP 0245700 A1
- DE 1071241 B1
- EP 0498583 A1
- DE 19828742 A1
- DE 2824418 A1
- DE 3324211 A1
- EP 0082291 A
- EP 0178531 A
- EP 0227975 A
- EP 0234395 A
- EP 0245786 A
- EP 0261 A
- EP 385 A
- EP 0310971 A
- EP 0333327 A
- EP 0414199 A

- EP 0456270 A
- EP 0476514 A
- US 3922253 A
- DE 3826693 A1
- DE 4017075 A1
- DE 4124167 A1
- DE 4133704 A1
- DE 4204518 A1
- DE 4204611 A1
- EP 0257513 A
- EP 0408858 A
- EP 0523267 A
- EP 0557822 A
- DE 3910829 A1
- DE 4009931 A1
- DE 4009932 A1
- DE 4101696 A1
- DE 4132430 A1
- DE 4134290 A1
- DE 4203510 A1
- EP 0365098 A
- EP 0365775 A
- EP 0469079 A
- EP 0546640 A
- DE 4419216 A1
- DE 4442518 A1
- DE 4222194 A1
- DE 4227580 A1
- EP 0509392 A
- EP 0509393 A
- EP 0522648 A
- EP 0544206 A
- EP 0555705 A
- EP 0652265 A
- EP 0666779 A
- EP 0714958 A

**In der Beschreibung aufgeführte Nicht-Patentliteratur**

- *Römpps Chemie Lexikon,* 1981, vol. 2 (8), 1126-1127
- Römpp Lexikon Lacke und Druckfarben. Georg Thieme Verlag, 1998, 546
- **BEGRIFF.** Römpp Lexikon Lacke und Druckfarben. Georg Thieme Verlag, 1998
- Römpp Lexikon Lacke und Druckfarben. Georg Thieme Verlag, 1998, 274, , 275

- Härtung von Kunststoffen. *Römpps Chemie Lexikon,* 1983, vol. 8, 1602
- Römpp Lexikon Lacke und Druckfarben. Georg Thieme Verlag, 1998, 29
- **JOHAN BIELEMAN.** Aminoharze", dem Lehrbuch "Lackadditive. Wiley-VCH, 1998, 242
- **BUCH.** Paints, Coatings and Solvents. Wiley-VCH, 1998, 80

- **B. SINGH ; MITARBEITER.** Carbamylmethylated Melamines, Novel Crosslinkers for the Coatings Industry. *Advanced Organic Coatings Science and Technology Series,* 1991, vol. 13, 193-207

- **K. KATAOKA.** *Chemical Engineering Science,* 1995, vol. 50 (9), 1409-1416